# EUROPEAN PATENT APPLICATION

(11) **EP 1 988 671 A1**
(43) Date of publication of application: **05.11.2008**
(21) Application number: 07110605.8
(22) Date of filing: 19.06.2007
(51) Int. Cl.: H04L 12/58

(54) **Spam short message blocking system using a call back short message and a method thereof**

(30) Priority: 27.04.2007 KR 20070041545
(71) Applicant: Nurvision Co., Ltd., Seoul 136-130 (KR)
(72) Inventor: Shim, Dongho, 136-140, Seoul (KR)
(74) Representative: Bungartz, Klaus Peter

(57) **Abstract**

The present invention relates to a spam SMS blocking system and a method thereof for blocking reception of SMS messages which are randomly transmitted in large quantities for the purpose of advertisement among short messages (SMS messages) transmitted through a wireless communication network.

The present invention provides a spam short message blocking system for authenticating a short message (SMS message) before the short message transmitted to a receiver terminal user from a sender terminal user is transmitted to a receiver terminal, comprising an SMS processing server for receiving the short message from the sender terminal user, requesting authentication on whether the short message is transmitted to the sender terminal user, and for sending the short message to the receiver terminal if a response for the request exists.

## Description

The present invention generally relates to a spam short message blocking system using a call back short message and a method thereof, and more specifically, to a spam short message blocking system using a call back short message and a method thereof for blocking reception of spam short messages which are randomly transmitted in large quantities for the purpose of advertisement among short messages (so-called SMS (Short Message Service) messages) transmitted through a wireless communication network, by using the call back short message.

Short messages are the so-called SMS messages, occupying an important position as communication means capable of transmitting short messages between multilateral parties such as terminals to a communication provider or between the terminals through a wireless communication network. Also, the usage of the short messages is rapidly increasing. As convenience and application of the short messages are increased and diversified, importance of the short messages as message exchanging means for personal purposes as well as business purposes gradually gets larger, and it takes more time for sending the short messages and for checking received short messages.

Meanwhile, while the short messages are generally used and the importance gets higher, spam short messages using e-mail through advertising/marketing are rapidly increasing by targeting many and unspecified persons. These spam short messages make ill use of the fact that short messages can be received regardless of receivers' intentions, without worrying about whether contents of the messages are checked or not. Therefore, there is a problem that the receivers have to spend a lot of time to check or delete unwanted short messages (spam short messages).

Especially, since such spam short messages have an intention of being transmitted to more receivers, even the receivers' telephone numbers are traded in to send a large number of short messages. Recently, even programs for automatically transmitting spam short messages have been distributed, so that anyone can easily send spam short messages to many and unspecified persons. As a result, the number of the spam short messages is soaring so that general receivers receive more than tends of spam short messages in maximum in a day on the average. Furthermore, let alone the fact that unwanted information of the receivers is contained in the spam short messages, the spam short messages are misused as means for spreading malicious codes such as virus or spyware, thus damage of the messages gets more serious on a daily basis.

So, not only should receivers of wireless terminals make a lot of effort and time to handle unnecessary spam short messages by deleting them, but problems of exposure to malicious codes occur, and particularly, short messages for advertising adult products are delivered even to wireless terminals of minors.

In order to block the above spam short messages, communication providers and wireless terminal manufacturers have suggested several technologies. One of the technologies is to set a random keyword on a user's wireless terminal, to block a received short message if the stored keyword is included in contents of the received short message. The above method has an advantage of blocking spam short messages by operating a user wireless terminal only, but owing to usage of a keyword type, short messages which have to be received are blocked in some cases and the user has to directly input a keyword, which is a useless thing to people unfamiliar with usage of wireless terminals. There is a particular number blocking service as a service provided by the communication providers, for example, '060-' blocking service. However, due to technical development, in case of message sending companies which send spam short messages in large quantities, they obtain a method of sending a sender's number by changing the sender's number into another virtual number. Accordingly, a sufficient blocking service for the spam short messages cannot be accomplished even by the particular number blocking service.

[Disclosure]

[Technical Solution]

It is therefore an object of the present invention to provide a spam short message blocking system using a call back short message and a method thereof for effectively blocking spam short messages randomly transmitted to unspecified receivers, by sending a predetermined call back SMS message to a sender of a short message, and by recognizing a short message only which is sent from an authenticated sender as a normal short message so that the normal message is received in a receiver.

Moreover, it is another object of the present invention to provide a spam short message blocking system using a call back short message and a method thereof for preventing only authenticated short messages from being infinitely transceived between a sender and a receiver, by enabling a mail system to distinguish a general short message (spam mail, general mail) from an authenticated short message to receive the distinguished messages when the authenticated short message is transmitted to the sender of a short message.

Besides, it is another object of the present invention to provide a spam short message blocking system using a call back short message and a method thereof for allowing a receiver to randomly receive and check a short message sent from a sender before a response is received in an authenticated short message transmitted to authenticate the sender of the short message.

[Description of Drawings]

The advantages of the invention will become readily apparent to those skilled in the art from the following detailed description of a preferred embodiment when considered in the light of the accompanying drawings, in which:

Fig. 1 is a format diagram of a spam short message blocking system of one embodiment in accordance with the present invention;

Fig. 2 is a format diagram of a spam short message blocking system of one embodiment in accordance with the present invention;

Fig. 3 is a task flow chart showing a case where a user of a receiver wireless terminal does not subscribe for a spam short message blocking service;

Fig. 4 is a task flow cart showing a case where a sender wireless terminal is not stored in a user SMS allowable DBMS though a user of a receiver wireless terminal subscribes for a spam short message blocking service;

Fig. 5 is a task flow chart showing a case where a sender wireless terminal is stored in a user SMS allowable DBMS (150) while a user of a receiver wireless terminal subscribes for a spam short message blocking service;

Fig. 6 is a format diagram of a spam short message blocking system of one embodiment in accordance with the present invention; and

Fig. 7 is a task flow chart showing a case where a sender terminal is not stored in a user SMS allowable DBMS though a user of a receiver wireless terminal subscribes for a spam short message blocking service.

Fig. 8 is an example of an authenticated call back SMS message.

[Mode for Invention]

The present invention will now be described more fully hereinafter with reference to the accompanying drawings, in which preferred embodiments of the invention are shown.

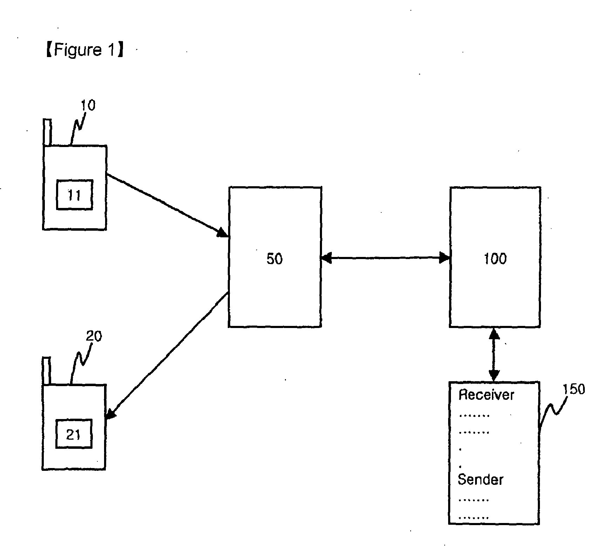

Fig. 1 is a format diagram of a spam short message blocking system of one embodiment in accordance with the present invention. Like shown in Fig. 1, the spam short message blocking system consists of wireless terminals (10,20), an SMS processing server (50), a call back decision server (100), and a user allowable DBMS (150).

The wireless terminals (10,20) mean terminals which wirelessly transceive short messages, and there are cellular phones as representative examples. In the present invention, a wireless terminal which sends an SMS message is called the sender wireless terminal (10) and a wireless terminal which receives the SMS message is called the receiver wireless terminal (20), for the sake of convenience. The wireless terminals (10,20) are equipped with applications for downloading address books to the user allowable DBMS (150).

The short message processing server (50) is a server that directly delivers a short message (hereinafter, "SMS" message) to the receiver wireless terminal (1), or sends the corresponding SMS message to the call back decision server (100) and transmits an authentication call back SMS message to the wireless terminal (10, hereinafter, 'sender wireless terminal') which sends the SMS message, according to a control signal of the call back decision server (100) (2), or transmits the corresponding SMS message to the receiver wireless terminal according to the control signal of the call back decision server (100) (3).

The call back decision server (100) perceives a receiver of the SMS message transmitted from the SMS processing server (30) and requests the SMS processing server (50) to send the corresponding SMS message to the receiver wireless terminal (20), depending on whether a corresponding sender is included in the user allowable DBMS (150) (1), or sends a call back SMS message to the SMS processing server (50) and requests the SMS processing server (50) to transmit the corresponding SMS message to the receiver wireless terminal (20), depending on whether a response for the call back SMS message is received from the sender wireless terminal (10) or generates a control signal for deleting the corresponding SMS message if the response is not received for a certain period of time (2), or transmits the call back SMS message to the sender wireless terminal (10) and requests the SMS processing server (50) to send the corresponding SMS message to the receiver wireless terminal (20), depending on whether the sender wireless terminal (10) responds to the message or generates the control signal for deleting the corresponding SMS message if the response is not received for the certain period of time (3).

The user allowable DBMS (150, DataBase Management System, hereinafter, 'DBMS') is a DBMS for storing sender's wireless terminal information to be received for each user. The wireless terminal information stored in the DBMS is a wireless terminal number or other ID information. In case users subscribe for a spam SMS, applications (11,21) are installed in the subscriber wireless terminals (10,20), and address book information stored in the subscriber wireless terminals (10,20) is stored in the user allowable DBMS (150) by using the corresponding applications (11,21).

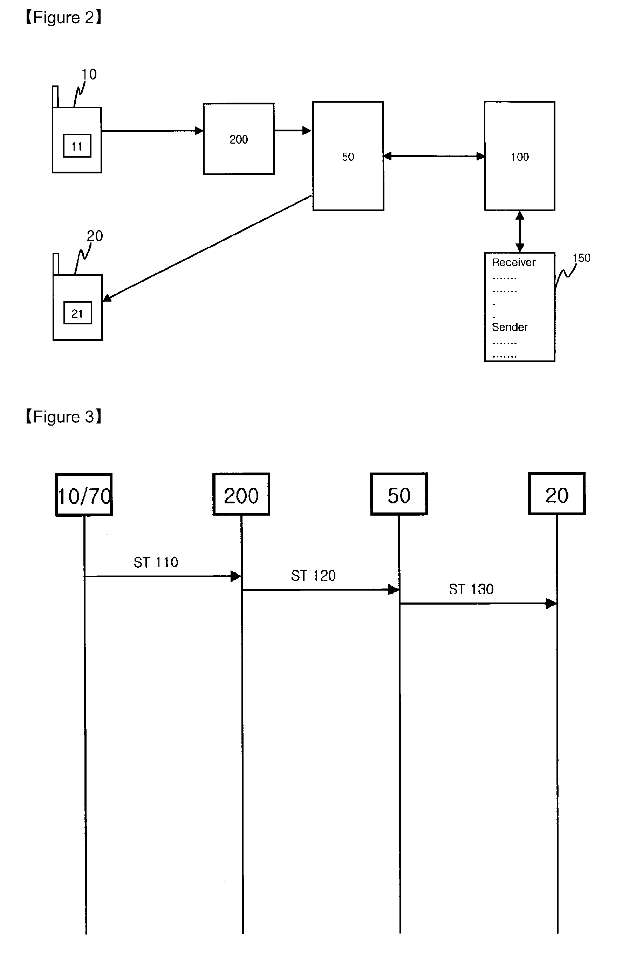

Fig. 2 is a format diagram of a spam short message blocking system of one embodiment in accordance with the present invention, being different from the embodiment of Fig. 1 by further comprising an authentication server (200). The authentication server (200) is a processing unit for authenticating a subscriber who applies for a spam SMS blocking service using a call back SMS message. While the system of the embodiment of Fig. 1 targets all subscribers, the embodiment of Fig. 2 is to provide a service by targeting the subscriber who applies for the spam SMS blocking service using the call back SMS message. Since the system of Fig. 1 and the system of Fig. 2 have the same configuration except the authentication server (200), operation of the spam short message blocking system in accordance with the present invention will be described by targeting the system of Fig. 2.

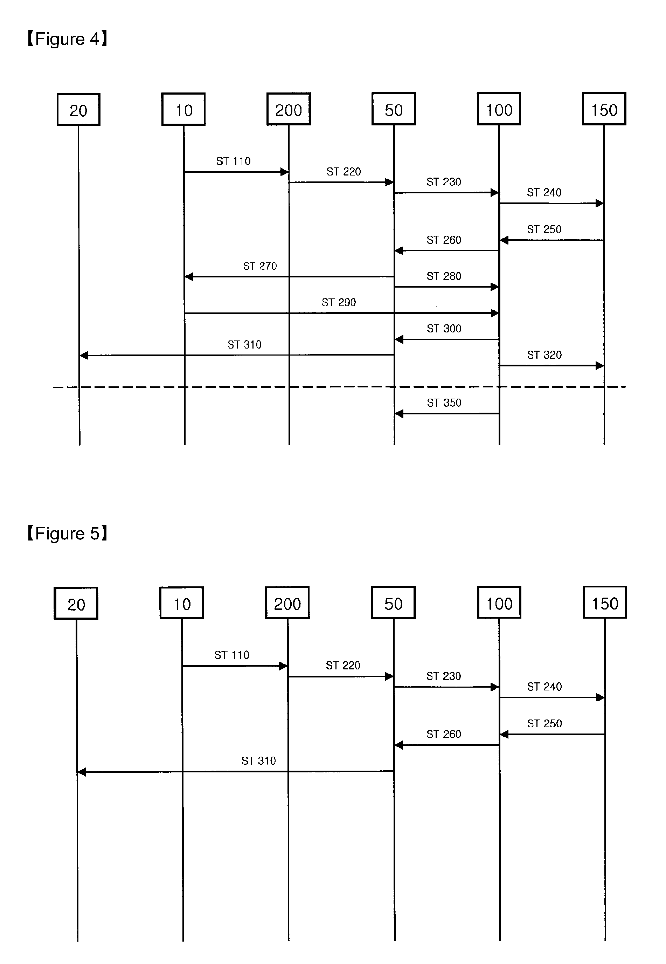

Fig. 3 to Fig. 5 are flow charts for a case where an SMS message is transceived between wireless terminals (10,20). Fig. 3 is a task flow chart showing a case where a user of a receiver wireless terminal does not subscribe for a spam short message blocking service, Fig. 4 is a task flow cart showing a case where a sender wireless terminal is not stored in a user SMS allowable DBMS (150) though a user of the receiver wireless terminal (20) subscribes for a spam short message blocking service, and Fig. 5 is a task flow chart showing a case where a sender wireless terminal is stored in a user SMS allowable DBMS (150) while a user of the receiver wireless terminal (20) subscribes for a spam short message blocking service.

First, it will be described the task flow chart of Fig. 3 which shows the case where the user of the receiver wireless terminal (20) does not subscribe for the spam short message blocking service. An authentication server (200) authenticates whether a receiver of an SMS message received from the sender wireless terminal (10) is a subscriber joined in the spam SMS blocking service (ST110), and if the receiver is not joined, the authentication server (200) instructs an SMS processing server (50) to send an SMS message (ST120). The SMS processing server (50) sends the corresponding SMS message to the receiver wireless terminal (20) (ST130).

Next, it will be described the task flow chart of Fig. 4 which shows the case where the sender wireless terminal is not stored in the user SMS allowable DBMS (150) though the user of the receiver wireless terminal (20) subscribes for the spam short message blocking service. An authentication sever (200) authenticates whether a receiver of an SMS message received from the sender wireless terminal (10) is a subscriber joined in the spam SMS blocking service (ST110), and if the receiver is joined, the authentication server (200) notifies an SMS processing server (50) that the receiver is joined (ST220). The SMS processing server (50) stores the corresponding SMS message, and requests a call back decision server (100) to decide whether call back SMS transmission is required (ST230). Such a request is available by sending sender wireless terminal information and receiver wireless terminal information. The call back decision server (100) checks whether sender terminal information is included in a list stored by setting the receiver wireless terminal information to a key in the user allowable DBMS (150) (ST240), and the checked results are transmitted to the call back decision server (100) (ST250). If the checked results showing that the sender terminal information is not included are received from the user allowable DBMS (150), the call back decision server (100) requests the SMS processing server (50) to generate an authenticated call back SMS message (ST260). The SMS processing server (50) generates the authenticated call back SMS message, and sends the generated message to the sender wireless terminal (10) (ST270). Also, the SMS processing server (50) transmits a corresponding call back number to the call back decision server (100).

At this time, it is desirable to form an address to which the authenticated call back SMS message is called back as a URL (Uniform Resource Locator) of the call back decision server (100), and a method of generating the call back number varies in number systems according to each SMS message. And, if a great number of SMS messages is generated, sequential numbers are generated and attached to the back of numbers in accordance with each SMS message, then if particular values pass by, a recirculating method can be used. It is needless to say that various transformations of a call back number generation method are available when necessary.

The sender wireless terminal (10) transmits a response for the corresponding authenticated call back SMS message to the call back decision server (100) (ST290). If a response signal is received from the sender wireless terminal (10), the call back decision server (100) requests the SMS processing server (50) to send an SMS message corresponding to an equivalent call back number (ST300). The SMS processing server (300) responds to the request and sends the corresponding SMS message to the receiver wireless terminal (20) (ST310). In addition, if a response for the authenticated call back SMS message is received from the sender wireless terminal (10), the call back decision server (100) requests the user allowable DBMS (150) to store sender wireless terminal information in an allowable list of the corresponding SMS receiver (ST320). Since the sender terminal information whose SMS reception is allowed one time is stored in the user allowable DBMS (150) in the step 'ST320', a next transmitted SMS message can be immediately delivered to a receiver without a procedure of sending an authenticated call back SMS message according to a process of Fig. 5.

If the response is not received from the sender wireless terminal (10) for a certain period of time after the step 'ST280', the call back decision server (100) decides that the corresponding SMS message is a spam SMS message, and requests the SMS processing server (50) to delete the corresponding SMS message (ST350).

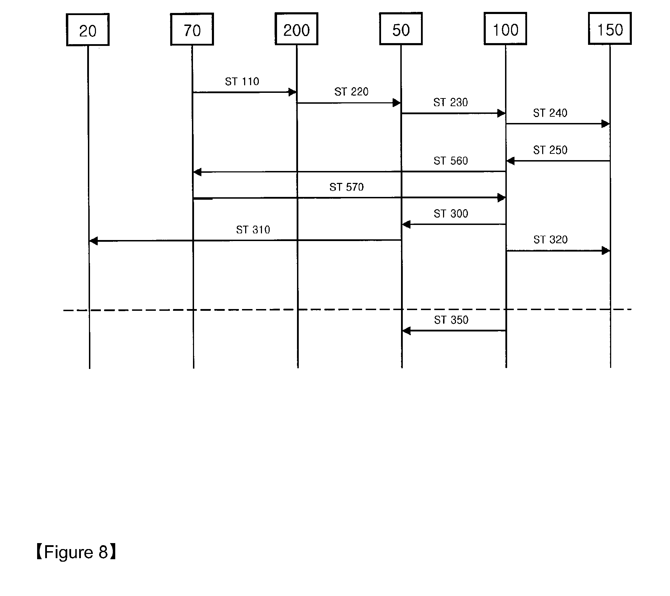

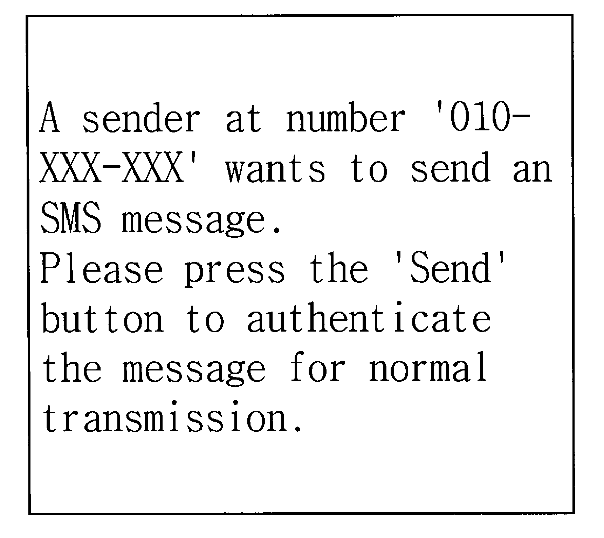

The authenticated call back SMS message is an SMS message for receiving authentication showing that the corresponding SMS message is transmitted to a sender, and at this point, a URL (Uniform Resource Locator) to be called back is designated as a URL of a WAP (Wireless Application Protocol) of the call back decision server (100). An example of the authenticated call back SMS message is illustrated in Fig. 8, and an SMS sender can just press a "Send" button after receiving the authenticated call back SMS message. In case of spam SMS messages, there exists a method of sending SMS messages to a plurality of receivers in large quantities or of randomly generating a sender's number to transmit the generated number, thus a proper response for such an authenticated call back SMS message is not transmitted, thereby blocking the spam SMS messages.

In an example of an authenticated call back SMS message illustrated in Fig. 8, it is shown that a "Send" button is simply pressed by a sender wireless terminal (10) as an authentication signal, but it is one embodiment only, therefore there may be a lot of other embodiments. For instance, it is also possible that an authentication number is transmitted through an authenticated call back SMS message, and that a sender is requested to input the corresponding authentication number.

In this case, when the authenticated call back SMS message is transmitted to the sender wireless terminal (10) in the step 'ST270', it is problematic if the corresponding sender wireless terminal (10) also subscribes for the spam SMS blocking service. Being considered on the sender wireless terminal (10) side, the authenticated call back SMS message can be shown as an SMS message to be received. Accordingly, it has a problem that the authenticated call back SMS message should be transmitted again to authenticate a sender side who sends the authenticated call back SMS message through the flow chart illustrated in Fig. 4. That is, if both sender and receiver suscribe for the spam SMS blocking service in accordance with the present invention, the authenticated call back SMS message should be repeatedly transmitted between the sender wireless terminal (10) and the receiver wireless terminal (20). So, if such a situation is not solved in the end, it causes a problem that the SMS message cannot be received.

To solve the above problems, the call back decision server (100) has a method of adding a URL of the authenticated call back SMS message to an allowable list of the sender wireless terminal in the user allowable DBMS (150), before the authenticated call back SMS message is transmitted to the sender wireless terminal. Also, there is another method of recording information indicative of an SMS message for authentication in a call back SMS header unit by differently setting an authenticated call back SMS message format from a general SMS message format, or of sending the authenticated call back SMS message by inserting a particular character string into the text of the authenticated call back SMS message.

Next, by referring to Fig. 5, it will be described the case where the sender wireless terminal is stored in the user SMS allowable DBMS (150) while a user of the receiver wireless terminal (20) subscribes for the spam short message blocking service.

Processing flows up to the steps 'ST220' to 'ST250' from the step 'ST110' are the same as the case of Fig. 4. However, in the step 'ST260', the call back decision server (100) receives the checked results showing that the sender terminal information is included from the user allowable DBMS (150), and requests the SMS processing server (50) to send the SMS message to the receiver wireless terminal (20) (ST260). The SMS processing server (50) transmits the corresponding SMS message to the receiver wireless terminal (20).

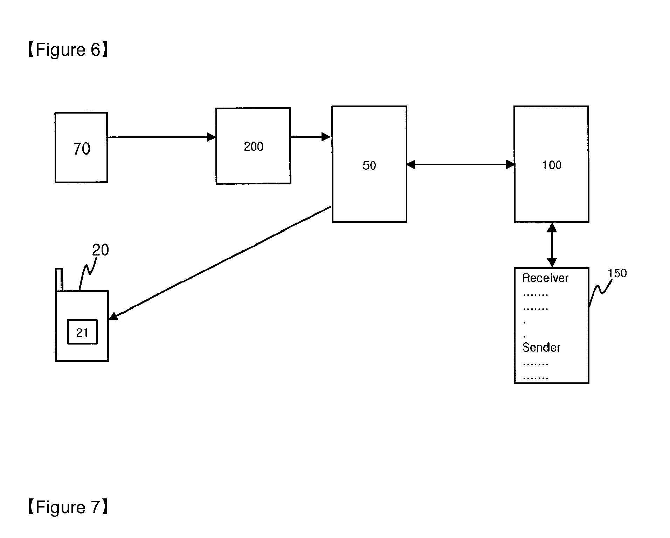

Fig. 6 is a format diagram of a spam short message blocking system of one embodiment in accordance with the present invention. A difference with the spam short message blocking system illustrated in Fig. 2 is a sender terminal which sends an SMS message, and the sender terminal is realized by using an AP (70, Application Server) for sending SMS messages in large quantities. Almost all functions are the same in case of Fig. 6, but a call back decision server (100) and the AP (70) have some differences in task flows in terms of the fact that direct communication between both parties is available by using TCP/IP. Therefore, as for an operational explanation for the spam short message blocking system suggested in Fig. 6, only some parts which are different from the operation of the spam short message blocking system suggested in Fig. 2 will be described as follows.

If a user of the receiver wireless terminal (20) does not subscribe for the spam short message blocking service, the corresponding SMS message is transmitted to the receiver wireless terminal (20) according to the same procedure as the flow chart suggested in Fig. 3. Likewise, a task flow chart showing a case where the user of the receiver wireless terminal (20) subscribes for the spam short message blocking service and a sender terminal (70) is stored in the user SMS allowable DBMS (150) is processed according to the task flow suggested in Fig. 5.

As for a task flow chart showing a case where the sender terminal (70) is not stored in the user SMS allowable DBMS (150) while the user of the receiver wireless terminal (20) subscribes for the spam short message blocking service, task flows up to the step 'ST250' from the step 'ST110' are equally progressed with the embodiment of Fig. 4. From now on, by referring to Fig. 7, a task flow different from that of Fig. 4 will be described as follows.

If the checked results showing that the sender terminal information is not included are received from a user allowable DBMS (150), a call back decision server (100) writes call back authentication e-mail to be transmitted to a sender terminal (70), and transmits the written mail to a sender terminal (70) (ST560).

At this moment, it is desirable to form an address to which authenticated call back mail is called back as a URL (Uniform Resource Locator) of the call back decision server (100), and a method of generating a call back number varies in number systems according to each SMS message. And, if a great number of SMS messages is generated, sequential numbers are generated and attached to the back of numbers in accordance with each SMS message, then if particular values pass by, a recirculating method can be used. It is needless to say that various transformations of a call back number generation method are available when necessary.

In the embodiment of Fig. 6, a term 'call back authentication mail' is used for a method of demanding a response to the sender terminal (70) from the call back decision server (100), instead of a call back authentication SMS message being used. It is because in case of the system of Fig. 6, direct transmission is available between the call back decision server (100) and the sender terminal (70) by using the same communication protocols such as TCP/IP without another mediating device. Therefore, the call back decision server (100) and the sender terminal (70) can authenticate the call back number in various ways, and an SMS may be included in the above authenticating method. Consequently, the call back authentication mail is used as a wider term which contains an SMS type, and should be interpreted as including authenticating methods using various communication methods for authenticating between two servers as well as including e-mail or WEB authentication methods.

The sender terminal (70) transmits a response for the corresponding authenticated call back SMS message to the call back decision server (100) (ST570). If a response signal is received from the sender terminal (70), the call back decision server (100) requests an SMS processing server (50) to send the corresponding SMS message (ST300). The SMS processing server (50) sends the corresponding SMS message to a receiver wireless terminal (20) by responding to the request (ST31 0). Moreover, if a response for an authenticated call back SMS message is received from the sender terminal (70), the call back decision server (100) requests a user allowable DBMS (150) to store sender terminal information in an allowable list of a corresponding SMS receiver (ST320).

If the response is not received from the sender terminal (70) for a certain period of time after the step 'ST280', the call back decision server (100) decides that the corresponding SMS message is a spam SMS message, and requests the SMS processing server (50) to delete the corresponding SMS message (ST350).

A configuration example of a short message processing system is suggested in Fig. 1, Fig. 2, and Fig. 6 as one embodiment of the present invention. In case of the the short message processing system, it is desirable that the authentication server (200) and the SMS processing server (50) are generally equipped in a communication provider, and that the call back decision server (100) and the user allowable DBMS (150) are operated by a business which takes full charge of spam short message processing. However, depending on the way a server that constitutes the system is to be operated, various combinations are possible according to benefits between each communication provider and each business.

[Industrial Applicability]

As stated so far, a spam SMS blocking system and a method thereof in accordance with the present invention can effectively block spam SMS messages by authenticating senders of SMS messages through responses for authenticated SMS messages, and can also prevent the authenticated SMS messages from being repeatedly transceived, by distinguishing the authenticated SMS messages from general SMS messages between spam blocking systems.

Again, the spam SMS blocking system and the method thereof in accordance with the present invention have the following advantages:

First, an authenticated SMS message is transmitted to a sender for an SMS message transmitted from the sender who is not registered in a subscriber allowable DBMS, and the sender is authenticated, depending on whether the sender responds to the authenticated SMS message. Thus, it is possible to efficiently block spam SMS messages transmitted from virtual wireless terminal numbers which are randomly generated and spam SMS messages transmitted in large quantities to many and unspecified persons;

Second, SMS messages transmitted from authenticated senders only are received, thus a receiver's waste of unnecessary time for processing spam SMS messages and resource consumption can be tremendously reduced;

Third, since a sender side instead of a receiver side of an SMS message is able to handle a spam SMS blocking function, it is possible to prevent a waste of unnecessary resources of the receiver side's SMS processing system;

Fourth, in case of an SMS message for authentication, the SMS message is transmitted by inserting information for distinguishing an authentication SMS type into a header part or by inserting a particular character string into the text of the SMS message, so that an SMS processing server which receives the SMS message for authentication can identify the received SMS message as the authentication SMS message, thereby preventing the authentication SMS message from being repeatedly transceived; and

Fifth, sender terminal information whose SMS reception is allowed one time is stored, thus an SMS message transmitted later can be immediately delivered to the receiver without a procedure of sending an authenticated call back SMS message.

In accordance with the provisions of the patent statutes, the present invention has been described in what is considered to represent its preferred embodiment. However, it should be noted that the invention can be practiced otherwise than as specifically illustrated and described without departing from its spirit or scope.

## Claims

1. A spam short message blocking system using a call back short message for authenticating a short message (SMS message) before the short message transmitted to a receiver terminal user from a sender terminal user is transmitted to a receiver terminal, comprising: an SMS processing server for receiving the short message from the sender terminal user, requesting authentication on whether the short message is transmitted to the sender terminal user, and transmitting the short message to the receiver terminal if a response for the request exists.

2. The spam short message blocking system of claim 1, wherein an authentication server for authenticating whether the receiver terminal user subscribes for a spam short message blocking service is further comprised.

3. The spam short message blocking system of claim 1, wherein a user allowable DBMS for storing sender terminal ID information that allows short message reception for each terminal user is further comprised.

4. The spam short message blocking system of claim 2, wherein a call back decision server is further comprised to request the SMS processing server to send a call back short message if SMS reception of the sender is not allowed, by referring to the user allowable DBMS.

5. The spam short message blocking system of claim 4, wherein in order to distinguish the call back short message from the short message transmitted to the receiver terminal user from the sender terminal user, information indicative of an authentication call back short message is recorded in a header unit of the call back short message or a particular character string is inserted into the text of the call back short message.

6. The spam short message blocking system of claim 4, wherein the call back decision server is a WAP server.

7. As a method for authenticating a short message (SMS message) before the short message transmitted to a receiver terminal user from a sender terminal user is transmitted to a receiver terminal, a spam short message blocking method using a call back short message, comprising the steps of: a first step of receiving the short message from the sender terminal user; a second step of requesting authentication on whether the short message is transmitted to the sender terminal user; and if a response for the request of the second step exists, a third step of transmitting the short message to the receiver terminal.

8. The spam short message blocking method of claim 7, wherein if a response for the authentication is not received from the sender terminal user for a certain period of time after the second step, a fourth step of deleting the short message is further comprised.

9. The spam short message blocking method of claim 7, wherein the request for the authentication of the second step is conducted by a call back short message.

10. The spam short message blocking method of claim 9, wherein in order to distinguish the call back short message from the short message transmitted to the receiver terminal user from the sender terminal user, information indicative of an authentication call back short message is recorded in a header unit of the call back short message, or a particular character string is inserted into the text of the call back short message.
